# EUROPEAN PATENT APPLICATION

(11) **EP 0 763 510 A1**
(43) Date of publication of application: **19.03.1997**
(21) Application number: 96202564.9
(22) Date of filing: 13.09.1996
(51) Int. Cl.: C05G 3/00, A01N 25/26

(54) **System for controlled release of one or more agrochemicals**

(30) Priority: 14.09.1995 NL 1001198
(71) Applicant: Hycail B.V., 9804 TG Noordhorn (NL)
(72) Inventor: Laimböck, Johannes Franciscus, 7346 AC Hoog Soeren (NL); Pennings, Albert Johan, 9331 BE Norg (NL); Grijpma, Dirk Wybe, 9718 MS Groningen (NL); Kuijper, Hans Wieger, 9255 JM Tietjerk (NL)
(74) Representative: Smulders, Theodorus A.H.J., Ir.

(57) **Abstract**

The invention relates to a new system for the well-controlled release of one or more agrochemicals to the soil, which new system is based on a combination of materials, comprising a biologically degradable polymer and the agrochemical mentioned, as well as to a method for the controlled release of an agrochemical to the soil, which method is characterized in that a system as described above is provided on the ground.

## Description

The present invention relates to a system for the controlled release of one or more agrochemicals to the soil.

More specifically, the present invention relates to a system whereby the release of agrochemicals, such as fertilizers, herbicides, fungicides, insecticides, and the like, can occur in a controlled manner, which means not only that the release is delayed but also that the release occurs precisely at such a time and such a place as is desired for that application.

In view of the need for more foodstuffs, for economic reasons, and in view of increasing industrial applications, the agriculture is under great pressure to use the available agricultural area as efficiently as possible. As a consequence of this necessity to increase the yield, however, the soil is becoming increasingly poorer in nutrients and an increasingly higher degree of fertilization is required for a higher production.

Also for keeping gardens and landscape and sports fields, there is a need for a reduction of maintenance costs while plant and grass quality are maintained.

At the same time, in Europe the greater part of the drinking water for human consumption is obtained from natural groundwater. As a result of the increasing fertilization, but also the use of other agrochemicals, the groundwater that is pumped up from agricultural areas and in the vicinity of sports fields and the like, shows an increasingly higher degree of contamination with substances originating from the agrochemicals spread over the land above.

The above-mentioned intensive use of agrochemicals, and particularly fertilizers, also increases the risk of overfertilization of the soil, as a result of which the plant takes up less fertilizer and grows more slowly. This results in a lower yield and an increased contamination of the groundwater, since it has been established that in the current fertilizing practice more than 50% of all added soluble fertilizers bypasses the root of the plant and is not taken up.

Commercially available fertilizer particles, such as urea, ammonium nitrate, KAS, Ureas and the like, are often provided with a coating of an anti-baking agent for counteracting clotting (baking) of the granules during storage. These agents are generally not biodegradable (mineral oil, alkyl amines and the like).

Eventually these substances end up for the most part in the groundwater. Since such groundwater contaminated with fertilizer and other components is typically pumped up again for drinking water supply purposes, the drinking water production companies must employ extra costly purification methods for the purpose of producing drinking water that is suitable for human consumption.

Increased fertilization has also been found to have a negative effect on the microflora of the soil, which adversely affects plant growth. Moreover, through the use of fertilizers, a considerable amount of ammonia is produced, which as such may also give rise to environmental problems.

A first object of the invention is to provide a system for fertilization, as well as for the administration of other agrochemicals, in replacement of the currently used singular administration system. The advantages of the system according to the invention are, among others, that the fertilizer becoming available can be reduced in amount per unit time, that the fertilizer/water concentration in the vicinity of the root hairs of the plant is reduced considerably and is brought more into agreement with the optimum uptake concentration of the plant, that the duration of the presence of this reduced concentration of fertilizers at the root hairs is increased, that the growth of the microorganisms in the vicinity of the root hairs is activated, and that the amount of non-absorbed fertilizer, and hence the amount of ammonia being liberated, is reduced.

A second object of the invention is to provide an agrochemical system, in particular based on fertilizer, whereby the contaminating effect of anti-baking agents is reduced or even eliminated altogether.

The invention is based on the surprising insight that it is possible to realize one or more of these objectives by providing a system for the release, which may or may not be controlled, of agrochemicals, which is based on the agrochemical on the one hand and a biologically degradable polymer on the other.

This system can also make a positive contribution to the prevention of baking of fertilizer, whether or not in combination with the controlled release to the soil.

More specifically, as biologically degradable polymer is used an adjustable biopositive biodegradable polymer with a specific structure, optionally in combination with one or more other active components such as compounds influencing degradation, water content regulators, and spread improvers.

Surprisingly, it has been found that by the use of such a technology based on a system of an agrochemical and a biodegradable polymer, a number of advantages are achieved which were not expected. The system mentioned provides for a slow and controlled release of the agrochemicals contained in it. Through the decomposition of the polymer, this system further provides a nutrient for a large number of microorganisms which in turn can have a positive effect on the growth of the plant. These substances also limit the liberation of ammonia, while further the amount of active substance that is not absorbed by the plant or is not effective, is reduced considerably. In practice, this means that the present system makes it possible to offer a treatment which can be specified as desired in respect of duration and concentration.

As agrochemical, the various chemicals used in agriculture can be used, such as the various types of artificial fertilizers. It is also possible, however, to use vegetable fertilizer or animal manure, as well as combinations thereof. Another possibility concerns the use of fungicides, insecticides, herbicides and combinations thereof.

In the system of the invention, virtually all positive biodegradable polymers can be used, although it is preferred to use those polymers whose degradation products have a positive influence on the biosystem and therefore are good nutrients for a number of microorganisms in the soil. According to the invention, it is preferred to use natural polymers, polyamide esters, or polymers of biologically acceptable monomers, such as hydroxycarboxylic acids and/or cyclic esters. Examples of suitable monomers include lactic acid, glycol acid, citric acid, D-lactide, L-lactide, D,L-lactide, glycolide, trimethylene carbonate, ε-caprolactone, acetic acid and combinations thereof, the molecular weight of these polymers being preferably between 1,000 and 300,000, more particularly between 2,000 and 50,000.

Suitable polymers for use in the invention should be biologically degradable, preferably to components which have a positive influence on the ecosystem. This means *inter alia* that the polymer chain must contain chemically unstable bonds which can be broken under the influence of light or hydrolytically under the conditions prevailing at the location where they are administered.

In the system according to the invention, it is also possible to include accelerators, such as substances which readily absorb and release water. Examples include gelatin, calcium chloride, phosphorus oxide and the like. It is also possible to include so-called water content regulators, viz. the polymers known as "superabsorbers". These are specific hydrogel polymers with extremely high water absorbent and water releasing properties, such as polyhydroxymethacrylate.

Spread improvers which can be incorporated into the system include *inter alia* substances such as starch, talc, calcium hydroxide, magnesium carbonate, etc.

The system of the invention accordingly consists of a combination of a biologically degradable polymer and an agrochemical. The system will generally consist *inter alia* of granules of a combination of these two components. These could, for instance, be prills or granules of mixtures of the above components, obtained, for instance, by spraying a melt, solution, suspension or dispersion of the mixture referred to. Thus a homogeneous distribution of the various components in the system is obtained.

It is also possible, however, to shape the components by the use of the conventional extrusion techniques, whereby a core of the active component is obtained, while the outside is substantially formed by the biodegradable polymer or a combination of the polymer and the active component. Such a system has the advantage that granules are obtained which are provided with two different active surfaces, viz. on the one hand the more or less water-repellent biodegradable polymer surface, while on the other hand surfaces of the active, typically water absorbent, component are present.

It is also possible, however, to shape the system as a kind of core-shell technology, with the core of the particle being formed by the active component, surrounded by an outer layer of the polymer. Such systems can be obtained, for instance, by spraying a melt, solution, dispersion or suspension of the polymer on preformed particles of the active component. Suitable techniques are fluid-bed granulation and pan granulation. It is preferred, when using solvents, to opt for water or a biodegradable solvent, such as the lower alkyl lactates (methyl, ethyl, propyl and butyl). If desired, it is possible to include other active components, such as herbicides, fungicides and insecticides, in the solution that is applied to the surface of the granules.

If the purpose of the use of the biodegradable polymers resides solely in obtaining a free-flowing product, more particularly fertilizer granules, it may optionally suffice to apply finely divided polymer in an amount of 0.001 to 1% by weight on the surface of the granules.

The use of the degradable polymers according to the invention can be considered an effective controlled release system. This system enables the user to administer the agrochemicals to the ecosystem in a highly effective manner. The process of administration can proceed semicontinuously over a long period of time, at a lower concentration of fertilizer. In the process, the fertilizer water concentration can be kept constant at a more optimum level for uptake by the plant, which results in an improved yield per square meter. The current decrease of the amount of microorganism in the soil can be stopped, while a greater part of the fertilizer is absorbed by the plant. This leads to less pollution of the groundwater and a reduction of the emission of ammonia. Also, the distribution of the chemicals across the land is improved owing to the reduction of clotting.

An important advantage of a specific embodiment of the invention is that, by the use of the water content regulators or superabsorbers, the water content in the vicinity of the roots can be effectively optimized, practically independently of the amount of rainfall, whether large or small. As a result, an optimum growth condition can be created for the plant because the system will remove water from the environment of the roots if the amounts of rainfall are very large, whereas water will be given to the plant if the amount of rainfall is too low.

The invention will now be further explained in and by a few examples, which should not be construed as a limitation.

### Example 1

A mixture (A) is made of:
45 parts of polycondensate of lactic acid with a molecular weight of 6,000
1 part of gelatin
1 part of calcium chloride
2 parts of terranoval
1 part of starch
50 parts of fertilizing substances (calcium ammonium nitrate)
which are mixed at a temperature of 60°C, heated to 100°C and blown into the cold air by means of a drop producing machine, whose cooling path at a given cooling temperature is so long that it ends as a cooled small sphere (or prill/spat) of 2-20 mm (diameter).

These prills/spats have a glassy surface.

As a mixer, different types of mixing machines can be used, including extruders in the different designs thereof.

### Example 2

40 parts of Poly-D,L-lactide with a molecular weight of 10,000
1 part of gelatin
1 part of sulfated fish oil
58 parts of dried animal manure
are mixed at 60°C by means of a machine and granulated by means of a rotary chopper. (B)

### Example 3

The products of Examples 1 and 2 are mixed in a ratio of 70:30.

Upon analysis of the properties of the products of Examples 1-3, it was found that these product showed an excellent controlled release, while the granules did not bake. It was also established that the products were entirely biodegradable.

### Example 4

Fertilizer granules (urea, ureas and KAS) were sprayed with a 10 wt.% solution of a poly-D,L-lactide with a molecular weight of 25,000 in ethyl lactate, followed by drying of the granules obtained. A granule was thereby obtained which at the surface thereof was provided with a thin coating of polylactide (0.05% by weight, based on the weight of the granule). The effect thereof was that the granules remained free-flowing even after prolonged storage.

By increasing the amount of polylactide on the surface, a system was obtained which also provided a controlled release of the fertilizer.

### Example 5

Example 4 was repeated, but the solution was replaced by a 5 wt.% polylactide and 1 wt.% insecticide in ethyl lactate.

### Example 6

The polylactide of Example 4 was ground fine and applied as anti-baking agent to the surface of the above-mentioned fertilizer granules in an amount of 0.02% by weight. A free-flowing product was obtained, even after four months' storage.

## Claims

1. A system for the controlled release of one or more agrochemicals to the soil, comprising a biologically degradable polymer and said agrochemical.

2. A system according to claim 1, comprising as agrochemical a fertilizer, a herbicide and/or a fungicide.

3. A system according to claim 1, wherein a fertilizer is used in the system in an amount between 5 and 90% by weight.

4. A system according to claims 1-3, wherein vegetable fertilizer, fertilizer of animal origin, and/or artificial fertilizer is used.

5. A system according to claims 1-4, wherein, as biodegradable polymer, use is made of a polymer based on hydroxycarboxylic acids and/or cyclic esters, such as lactic acid, glycol acid, citric acid, lactide, glycolide, trimethylene carbonate, ε-caprolactone, acetic acid and combinations thereof.

6. A system according to claims 1-5, wherein the molecular weight of the biodegradable polymer is between 1,000 and 300,000.

7. A system according to claims 1-6, wherein the biodegradable polymer is applied to the surface of a granule of the agrochemical, more particularly an artificial fertilizer granule, by spraying a solution, suspension or dispersion of the biodegradable polymer in water or a biodegradable solvent.

8. A system according to claim 7, wherein the solution further contains one or more other active substances, such as insecticides, fungicides and herbicides.

9. A system according to claims 1-8, wherein further release regulating agents, water content regulating agents and/or spreading-behavior regulating agents are present in the system.

10. A system according to claim 9, wherein, as water content regulating agent, hydroxymethacrylate is present.

11. A system for the controlled release of one or more agrochemicals according to claims 1-10, in the form of prills or granules.

12. A system according to claims 1-11 with a particle surface which is either water-repellent or water-absorbent or comprises a combination of the two.

13. A method for the controlled release of an agrochemical to the soil, characterized in that a system according to claims 1-12 is provided on the soil.
